# EUROPEAN PATENT APPLICATION

(11) **EP 2 000 205 A1**
(43) Date of publication of application: **10.12.2008**
(21) Application number: 07380160.7
(22) Date of filing: 01.06.2007
(51) Int. Cl.: B01J 31/22, B01J 21/00, B01J 21/08, C01B 15/029

(54) **Process to obtain hydrogen peroxide**

(71) Applicant: REPSOL YPF S.A., 28046 Madrid (ES)
(72) Inventor: Cano Serrano, Encarnacion, 28903 Getafe (ES); Campos Martin, Jose Miguel, 28045 Madrid (ES); Garcia Fierro, José Luis, 28002 Madrid (ES); Blanco Brieva, Gema, 28924 Alcorcon (ES)
(74) Representative: Pons Arino, Angel

(57) **Abstract**

Process to obtain hydrogen peroxide by reacting hydrogen and oxygen in the presence of a solvent and of a catalyst which comprises at least one noble or semi-noble metal supported on an inorganic material functionalized with acid groups. The invention also refers to the catalyst used in said process.

## Description

This invention is related to a process to obtain hydrogen peroxide solution by means of the direct reaction of hydrogen and oxygen in the presence of a solvent and of a catalyst constituted from noble, semi-noble metals or combinations of several of these metals, supported on an inorganic material functionalized with acid groups.

### PRIOR STATE OF THE ART

Hydrogen peroxide is a highly important commercial product widely used as a bleaching agent in the textile or paper manufacturing industry, a disinfecting agent and basic product in the chemical industry and in the peroxide compound production reactions (sodium perborate, sodium percarbonate, metallic perioxides or percarboxyl acids), oxidation (amine oxide manufacture), epoxidation and hydroxylation (plasticizing and stabilizing agent manufacture). It is used for cleaning surfaces in the semiconductor industry, chemical polishing of copper, brass and other copper alloy surfaces, the engraving of electronic circuits, etc.

The industrial method currently most used for producing hydrogen peroxide is the self-oxidation of alkylanthrahydroquinones. This process which consists of a number of reduction, oxidation, extraction, purification and concentration stages, is highly complex, thus resulting in the investment and variable costs being quite high. One highly attractive alternative to this process is the production of hydrogen peroxide directly by reacting hydrogen and oxygen in the presence of metal catalysts from the platinum group using explosive concentrations of hydrogen (patents US4681751, US4772458, US4832938, US5338531) our outside of the explosive limit (patents WO9941190, WO0105498 W00105501, US6168775). However, in these processes, a high concentration of H⁺ and Br⁻ ions is required in the reaction medium in order to obtain high concentrations of hydrogen peroxide. These ions are obtained from strong acids, such as sulfuric, phosphoric, hydrochloric or nitric acids and inorganic bromides. But working with solutions having a high acid concentration requires the use of special equipment to resist the corrosion. Apart from the above, the presence of acid solutions and halogenated ions favors the dissolving of the active metals (platinum group), which results, first of all, in the deactivation of the catalyst and, due to the concentration of dissolved metals being very low, the recovery thereof becomes unfeasible.

To prevent these drawbacks, alternative processes without the presence of halide ions and/or acids in the reaction medium have been proposed. For example, in European patent EP492064, the use of a catalyst based on palladium supported on a resin functionalized with halogens is proposed, the reaction medium being water with a hydrogen peroxide stabilizing agent, but the concentrations of H₂O₂ achieved were only around 0.58% by weight. Another alternative (EP504741) is the use of palladium catalysts supported on inorganic solids of a superacid type, such as molybdenum, zirconium or wolframium oxides, however the hydrogen peroxide concentration achieved does not exceed 1% by weight. In the present European patent EP978316, a process is shown for obtaining hydrogen peroxide solutions by using palladium catalysts supported on active carbon functionalized with sulfonic groups. At this point, it is obvious that the preparation described in this method requires a large number of stages, and it is highly complicated to control the quality of the starting active carbons, which reproducibility is difficult.

These difficulties could be solved by means of using catalysts constituted from noble or semi-noble metals or combinations of more than one of these metals supported on an ion exchange acid resin (EP1344747). However, these materials show a low mechanical resistance to attrition, low specific surface area and low thermal stability.

### EXPLANATION OF THE INVENTION

This invention provides new catalysts making it possible to obtain hydrogen peroxide by means of directly reacting hydrogen and oxygen in its presence to obtain high-selectivity, high-concentration, non-corrosive hydrogen peroxide solutions. These catalysts are easily prepared, are reproducible and have a high mechanical resistance and large specific surface area.

In addition thereto, the present invention provides a process to obtain high-concentration hydrogen peroxide solutions by means of directly reacting hydrogen and oxygen in the presence of a solvent and the new catalysts constituted from noble or semi-noble metals or combinations of more than one of these metal supported on an inorganic material functionalized with acid groups.

The inventors have surprisingly discovered that the use of the catalysts constituted from a noble or semi-noble metal supported on an inorganic material functionalized with acid groups and using the reaction conditions described in this invention, non-corrosive, high-concentration and high-selectivity hydrogen peroxide solutions are obtained by the direct reaction between hydrogen and oxygen.

Therefore, in accordance with a first aspect of the present invention, a catalyst is provided to obtain hydrogen peroxide comprised of at least one noble or semi-noble metal selected from groups 7-11 of the periodic table according to the IUPAC, supported on an inorganic material functionalized with acid groups.

In one preferred embodiment of the present invention, the catalyst comprises at least one metal selected from among the group comprised of palladium, platinum, silver, gold, rhodium, iridium, ruthenium, osmium or any combination of these metals. In a more preferred embodiment, the catalyst comprises a palladium metal or combination of palladium with another metal (for example, platinum).

The amount of metal supported can be from 0.001% to 10% by weight in regard to the total support weight, preferably from 0.1 to 5% by weight.

The addition of the metal to the support can be performed by any of the known methods for preparing supported metal catalysts, such as, for example but not being limited to impregnation, adsorption, ion exchange, etc. For the impregnation, any type of salt which is soluble in the solvent used in the addition of the metal, such as: acetates, nitrates, halides, oxalates, etc., can be used.

The support employed in the catalysts described in this invention refers to an inorganic material functionalized with acid groups. The materials used in this invention refer to inorganic oxides which have a large specific surface area (> 20 m²/g) calculated by the BET method, preferably greater than 100 m²/g, and a pore volume of 0.1-3 ml/g.

The most appropriate compounds for this invention are the oxides of the elements of groups 2-14 on the periodic table of the elements according to the IUPAC. The oxides most employed can be selected from the group comprised of SiO₂, Al₂O₃, zeolites, B₂O₃, GeO₂, Ge₂O₃, ZrO₂, TiO₂, MgO or any mixtures thereof. The inorganic material most preferred in this invention is silicon oxide (also called silica) or the mixtures thereof with other inorganic oxides.

These materials can essentially be amorphous like a silica gel or can be comprised of an orderly structure of mesopores, such as, for example, of types including MCM-41, MCM-48, SBA-15, among others or a crystalline structure, like a zeolite. These inorganic materials functionalized with acid groups can be easily attained at the industrial level.

Acid groups are incorporated into the inorganic materials of the present invention, bonded to their surface, these acid groups preferably being selected from among the compounds comprised of sulfonic or carboxylic sulfides, the acid group more preferably being sulfonic.

The acid groups can be incorporated either during the preparation of the same material or in a process subsequent to its preparation.

The incorporation of these acid groups following synthesis of the inorganic solid takes place by a reaction between the surface hydroxiles and the compounds of the acid groups ((US3920582, US3936388, US4374263, FR2669033). This reaction takes place between the -OH group of the inorganic solid and a hydrolysable organic group such as alcoxides, halogens, etc. The compound which reacts with the surface -OH's may contain the acid group or can be added or formed in a subsequent stage. For example, by oxidation of thiol or thioether groups, reaction between organic groups and chlorosulfonic acid.

When the inorganic support functionalized with acid groups is prepared directly, a controlled hydrolysis process of a mixture of the precursors of the inorganic solid such as, for example tetraethoxysilane for SiO₂, and the precursors of the acid group is generally employed. If it is desired that this solid have an orderly structure, such as MCM-41, MCM-48, SBA-15, etc., - a structure-directing agent can be added.

These supports can be put through a surface dehydroxylation process, it being possible for this process to be carried out on the supports or following the addition of the metal described at a further point herein. The dehydroxylation process can be carried out, for example, by means of the reaction with compounds of an X-Si-(R₁R₂R₃) structure, where "X" is a functional group selected from among: Cl, Br, I, imidazol or the following three groups forming structures (I), (II) and (III). 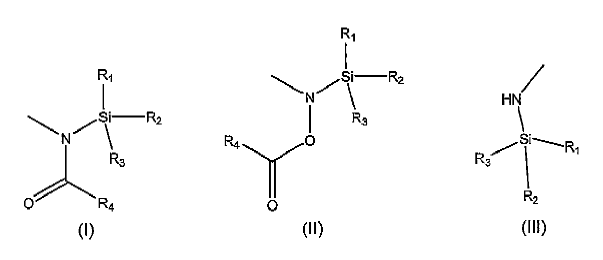 and in which R₁, R₂, R₃ y R₄ are functional groups of the alkyl, aryl or alkylaryl type in which the carbons range from 1 to 8 in number, such as, for example, methyl, ethyl, isopropyl, terc-butyl, phenyl or ethylphenyl.

Another possible dehydroxylation method is the reaction of the surface OH groups of the solid with dialkylcarbonates or diarylcarbonates in which the carbons in the alkyl or aryl group may range from 1 to 6 in number, for example, methyl, ethyl, isopropyl, terc-butyl or phenyl.

The dehydroxylation process can be carried out in gas or liquid phase in the presence or not of a solvent. In the liquid phase reaction case, a mixture will be prepared which includes the solid, the dehydroxylating reagent and, if necessary, the solvent. The temperature, concentration and contact time will be adjusted to achieve the desired degree of dehydroxylation. In the case of employing the gas-phase reaction, an inert gas will be run through. Nitrogen, carbon dioxide, helium, argon, etc can be used as inert gas, with the dehydroxylating reagent vaporized inside thereof through the solid to be processed, the temperature and the contact time will be adjusted to achieve the desired degree of dehydroxylation, the concentration of the reagent will be the appropriate for maintaining the dehydroxylating reagent in gaseous form.

In some cases, an additive can be put in to facilitate the dehydroxylation reaction, such as a base, the organic bases being preferred. As organic bases, compounds comprised of amino groups, such as triethylamine, tributylamine, dimethylamine, aniline, etc. or mixtures of these bases can be used.

The amount of dehydroxylating reagent employed will depend on different factors, some of which are the number of surface OH groups and the degree of dehydroxylation one wished to achieve. The preferred total amount of reagent is 1-15 moles of reagent per mole of OH groups present in the solid. The dehydroxylating temperature to be employed ranges from ambient temperature to 500°C, depending on the dehydroxylating method to be employed, gas phase or liquid phase, and on the reactivity of the dehydroxylating agents. The typical reaction time can range from 0.5 h to 24 h.

A second aspect of the present invention is related to a process to obtain a hydrogen peroxide solution by reacting hydrogen and oxygen in the presence of a solvent and one of the catalysts described in the invention.

The formation of the hydrogen peroxide is carried out by directly reacting the hydrogen and the oxygen inside a solvent in the presence of a catalyst with or without adding an inert gas. Nitrogen, carbon dioxide, helium, argon, etc. can be used as an inert gas. The working pressure is normally higher than the atmospheric pressure and preferably ranging from 2 to 30 MPa.

In another preferred embodiment of the invention, the mole ratio between the hydrogen and the oxygen can be from 1/1 to 1/1000. Additionally, the hydrogen concentration in the gas phase, in contact with the reaction medium must preferably be below 4.16% mole with regard to the composition of the gas phase in order to keep the operation outside of the explosive limits for mixtures of hydrogen with oxygen.

As solvents which can be used in the process of the invention, those compounds which are inert in nature under the reaction operating conditions of forming hydrogen peroxide by directly reacting hydrogen with oxygen may be considered. The solvents can be selected from the group comprised of water, alcohols (C₁-C₁₂), glycols (C₁-C₁₂) or any combinations thereof. The alcohols which can be used are aliphatic, such as: methanol, ethanol, 1-propanol, 2-propanol, 1-butanol, 2-butanol, 2-methyl-2-propanol, 2-methyl-1-propanol, 1-pentanol, etc; cycloaliphatic alcohols such as cyclohexanol, cyclooctanol, etc.; and aromatic alcohols such as 1-phenylethanol, 2-phenyethanol, etc. The glycols which can be used are: ethylene glycol, propylene glycol, diethylene glycol, dipropylene glycol, triethylene glycol, tripropylene glycol, etc.

In another preferred embodiment of the invention, the reaction is carried out at a temperature from-10°C to 100°C, preferably ranging from 0°C to 75°C.

The process of this invention can be carried out in continuous, semi-continuous or discontinuous mode, by the conventional methods, for example, in a stirred tank reactor with the catalyst particles in suspension, in a basket-type stirred tank reactor, etc. Once the reaction has reached the desired conversion levels, the catalyst can be separated by different known processes, such as, for example, by filtration if the catalyst in suspension is used, which would afford the possibility of its subsequent reuse. In this case the amount of catalyst used is that necessary to obtain a concentration 0.01 % to 10% by weight regarding the solvent and preferably being 0.1 % to 5% by weight.

The reaction can likewise be carried out in a fixed-bed reactor in accordance with known processes. To this end, the solvent and the oxygen and hydrogen gaseous current is made to flow over the catalyst bed in the presence or not of an inert gas, in parallel current or in countercurrent and under the temperature and pressure conditions previously stated hereinabove.

The reaction to obtain hydrogen peroxide in accordance with this invention can be carried out in the presence of a promoter to improve the yield of H₂O₂. These promoters, which are generally halogen compounds, can be, for example, bromide compounds such as hydrobromic acid, sodium bromide, potassium bromide or ammonium bromide, or chloride compounds such as hydrochloric acid, sodium chloride, potassium chloride or ammonium chloride. The amount of promoter employed in this invention is not critical and can range from 10⁻⁷ to 10⁻² moles per liter, preferably from 10⁻⁶ to 10⁻⁴ moles per liter.

In this invention, a hydrogen peroxide-stabilizing agent can also be added to the reaction medium. Some of the hydrogen peroxide-stabilizing agents of which mention can be made are inorganic acids such as: phosphoric acid, sulfuric acid, nitric acid, etc.; organic acids such as: aminomethylenephosphoric acid, etc.; amino acids such as: leucine, etc.; phosphoric acid salts such as: sodium pyrophosphate, etc.; chelanting agents such as EDTA, etc.; tensoactive agents such as: alkylbenzylsulfonates, etc. These stabilizing agents can be used individually or in combinations of several of them. The preferred stabilizing agents in this invention are animomethylenephosphoric acid, 1-hydroxyethylene-1.1-diphosphoric acid, ethylene diamine-tetramethylene phosphoric acid, the sodium salts of these compounds and sodium pyrophosphate. The stabilizing agent concentration depends on the type of stabilizing agent and on the concentration of hydrogen peroxide. However, it is preferable to keep the concentration of stabilizing agent low enough to prevent the dissolving of the metal in the catalyst and/or the corrosion of the reactor used. In general, the amount of stabilizing agent added is less that 5000 ppm in relation to the solvent and is preferably less than 500 ppm.

Throughout the description and the claims, the word "comprises" and the variations thereon do not intend to exclude other technical features, additives, components or steps. For the experts in this field, other objects, advantages and characteristics of the invention will be inferred in part from the description and in part from the embodiment of the invention. The following examples are provided for illustrative purposes and are not intended to be limiting of the present invention.

### EXAMPLES

### EXAMPLE 1

A catalyst was prepared from a commercial powdered silica functionalized with sulfonic groups from Silicycle Inc. (Product No. R60530B) (with a 0.8 mol/kg content in sulfonic groups, a 0.45 mil/g pore volume and a 216 m²/g BET specific area). Firstly, the solid was washed three times with acetone, using a solvent volume equal to that of the silica. Next, a suspension was prepared of the silica (4 g) with 50 ml acetone. A solution of palladium acetate (II) (86 mg) in acetone (20 ml) was added, drop-by-drop, to the solution. The suspension was concentrated down to half of the solvent in a rotating vacuum evaporator, the bath temperature having been 45°C. The solution was filtered and the resulting solid washed and air-dried at 110°C for 2 h. The palladium content was 2.01 % by weight.

### EXAMPLE 2

A catalyst was prepared employing the same method as in Example 1, but adding the double of the palladium salt (II). The palladium content was 4.03% by weight.

### EXAMPLE 3

1.6 g of catalyst from Example 1 were placed inside an autoclave with 150 g methanol and 24 ppm HBr, the temperature of the mixture having been stabilized at 40°C. The system was pressurized with a mixture of H₂:O₂:N₂ (3.6:46.4:50) with a flow of 2500 mIN/min up to 9.6 MPa (a) without stirring, the stirring (1500 rpm) then having been turned on to start the reaction. After two hours (2h) of reaction, a hydrogen peroxide concentration of 7.3% by weight was achieved, the hydrogen-to-hydrogen peroxide selectivity having been 65%.

### EXAMPLE 4

4.06 g of catalyst from Example 1 were placed inside an autoclave with 150 g methanol and 48 ppm HBr, the temperature of the mixture having been stabilized at 40°C. The system was pressurized with a mixture of H₂:O₂:N₂ (2:46.4:51.6) with a flow of 2500 mlN/min up to 9.6 MPa (a) without stirring, the stirring (1500 rpm) then having been turned on to start the reaction. After one hour (1h) of reaction, a hydrogen peroxide concentration of 4.7% by weight was achieved, the hydrogen-to-hydrogen peroxide selectivity having been 71 %.

### EXAMPLE 5

1.84 g of catalyst from Example 2 were placed inside an autoclave with 150 g methanol and 24 ppm HBr, the temperature of the mixture having been stabilized at 40°C. The system was pressurized with a mixture of H₂:O₂:N₂ (3.6:46.4:50) with a flow of 2500 mIN/min up to 9.5 MPa (a) without stirring, the stirring (1500 rpm) then having been turned on to start the reaction. After one hour (1h) of reaction, a hydrogen peroxide concentration of 4.2% by weight was achieved, the hydrogen-to-hydrogen peroxide selectivity having been 69%.

## Claims

1. Catalyst to obtain hydrogen peroxide comprised of at least one noble or semi-noble metal selected from groups 7 to 11, supported on an inorganic material functionalized with acid groups.

2. Catalyst according to Claim 1 hereinabove, where the metal is palladium, platinum, silver, gold, rhodium, iridium, ruthenium, osmium or any combinations thereof.

3. Catalyst according to Claim 2 hereinabove, where the metal is palladium or the combination of palladium with another metal.

4. Catalyst according to any of Claims 1-3 hereinabove, where the amount of metal is within the 0.001 % to 10% range in relation to the total weight of the support.

5. Catalyst according to Claim 4 hereinabove, where the amount of metal is within the 0.1% to 5% range in relation to the total weight of the support.

6. Catalyst according to any of Claims 1-5 hereinabove, where the inorganic material is an oxide selected from among the elements in groups 2 to 14.

7. Catalyst according to Claim 6 hereinabove, where the inorganic material is SiO₂, Al₂O₃, zeolites, B₂O₃, GeO₂, Ga₂O₃, ZrO₂, TiO₂, MgO or any mixtures thereof.

8. Catalyst according to Claim 7 hereinabove, where the inorganic material is SiO₂.

9. Catalyst according to any of Claims 1 -8 hereinabove, where the inorganic material has a BET specific surface area greater than 20 m²/g and a pore volume within the 0,1 ml/g to 3 ml/g range.

10. Catalyst according to Claim 9 hereinabove, where the inorganic material has a BET specific surface area greater than 100 m²/g.

11. Catalyst according to any of Claims 1-11 hereinabove, where the acid group of the inorganic material is selected from among the sulfide, sulfonic or carboxylic group.

12. Process to obtain a hydrogen peroxide solution by reacting hydrogen and nitrogen in the presence of a solvent and of the catalyst according to any of Claims 1-11 hereinabove.

13. Process according to Claim 12 hereinabove, where the reaction also comprises the presence of a promoter selected from halogenated compounds.

14. Process according to Claim 12, where the solvent is water, C₁-C₁₂ alcohol, C₁-C₁₂ glycol or mixtures thereof.

15. Process according to any of Claims 12-14 hereinabove, where the hydrogen-oxygen reaction temperature is within the -10°C to 100°C range.

16. Process according to Claim 15 hereinabove, where the reaction temperature is within the 0°C - 75°C range.

17. Process according to any of Claims 12-16 hereinabove, where the hydrogen-oxygen reaction pressure is higher than 1 MPa.

18. Process according to any of Claim 17 hereinabove, where the reaction pressure is within the 2 MPa to 30 MPa range.

19. Process according to any of Claims 12-18 hereinabove, where the molar ratio between the hydrogen and oxygen is within the 1:1 to 1:100 range.
